# EUROPÄISCHE PATENTSCHRIFT

(11) **EP 2 106 011 B1**
(45) Veröffentlichungstag und Bekanntmachung des Hinweises auf die Patenterteilung: **17.08.2016**
(21) Anmeldenummer: 09156430.2
(22) Anmeldetag: 27.03.2009
(51) Int. Cl.: H02K 3/28

(54) **Wicklungsanordnung für eine elektrische Drehfeldmaschine**
Winding arrangement for an electric induction machine
Ensemble d'enroulement pour machine électrique à induction

(30) Priorität: 27.03.2008 DE 102008015947
(43) Veröffentlichungstag der Anmeldung: 30.09.2009
(73) Patentinhaber: NIDEC MOTORS & ACTUATORS (Germany) GmbH, 74321 Bietigheim-Bissingen (DE)
(72) Erfinder: Schmid, Jürgen, 74348 Lauffen (DE)
(74) Vertreter: Hofmann, Harald

(56) Entgegenhaltungen:
- EP-A2- 1 677 409
- DE-A1-102006 035 699
- JP-A- 2007 202 263
- US-B1- 6 323 574

## Beschreibung

Die Erfindung bezieht sich auf Wicklungen von mehrphasigen Drehfeldmaschinen, insbesondere von bürstenlosen Gleichstrommotoren für Anwendungen in der Kraftfahrzeugtechnik.

In mehrphasigen Drehfeldmaschinen sind die Wicklungen der verschiedenen Phasen an bestimmten räumlichen Winkelpositionen angeordnet. Jeder Wicklung ist einer der elektrischen Phasen zugeordnet. In der Regel muss eine elektrische Verbindung innerhalb der Drehfeldmaschine vorgesehen sein, damit der Strom einer bestimmten Phase von den Anschlussklemmen der Drehfeldmaschine zu der zugeordneten Wicklung gelangen kann. Diese elektrischen Verbindungen beanspruchen Platz innerhalb der Drehfeldmaschine oder in ihrer Umgebung. Außerdem erhöhen sie den Entwicklungs- und Fertigungsaufwand, da für jede Phase speziell ausgelegte Verbindungen vorgesehen werden müssen. Alternativ können die Anschlussklemmen auch in der Nähe der entsprechenden Wicklung angeordnet sein. In diesem Fall wird der zusätzliche Aufwand und Platzbedarf jedoch lediglich von innerhalb der Drehfeldmaschine nach außerhalb verlagert.

In einer bekannten dreiphasigen Drehfeldmaschine mit den Phasen U, V, W besteht jede Phasenwicklung aus einer Reihenschaltung von vier Phasenspulen. Die Phasenwicklung der Phase V umfasst die Phasenspulen V1, V2, V3 und V4. Die vier Phasenspulen V1, V2, V3, V4 sind in dieser Reihenfolge in Reihe geschaltet. Entsprechendes gilt für die Phasen U und W mit den Phasenspulen U1, U2, U3, U4 bzw. W1, W2, W3, W4.

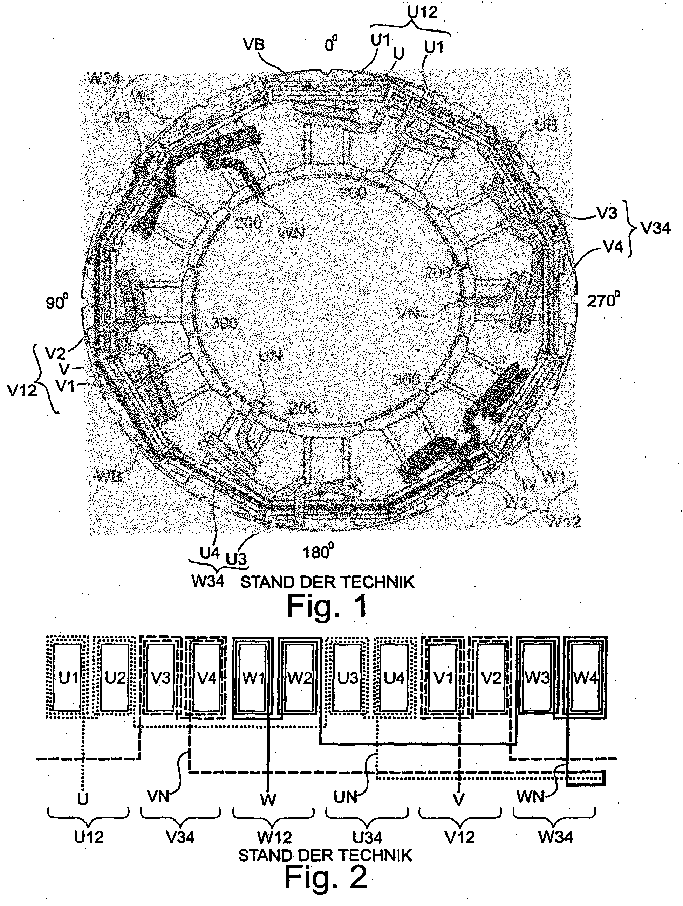

Fig. 1 (Design A) zeigt das normale Wicklungsschema. Die Phasenwicklungen der Phasen U, V, W sind identisch und lediglich um 120° gegeneinander gedreht. Dadurch liegen auch die Phasenanschlüsse jeweils 120° auseinander. Der Anschluss der Phase U befindet sich bei 0°, der Anschluss der Phase V befindet sich bei 120° und der Anschluss der Phase W befindet sich bei 240°. Entsprechendes gilt für die Sternpunktanschlüsse UN, VN und WN, die bei 150°, 270° bzw. 30° liegen.

Jeweils zwei benachbarte Phasenspulen derselben Phase sind zu einem Phasenspulenpaar zusammengefasst. Zum Beispiel sind die Phasenspulen U1 und U2 zu einem Phasenspulenpaar U12 zusammengefasst. Die Phasenspulen U3 und U4 bilden ein zweites Phasenspulenpaar U34 der U-Phase. Die Phasenwicklung der V-Phase umfasst zwei Phasenspulenpaare V12 und V34. Die Phasenwicklung der W-Phase umfasst zwei Phasenspulenpaare W12 und W34.

Die in Fig. 1 dargestellte Drehfeldmaschine weist eine Sternschaltung der drei Phasen U, V und W auf. Dementsprechend umfasst jede Phasenwicklung ein erstes Ende, das mit der Klemme der entsprechenden Phase der Drehfeldmaschine elektrisch verbunden ist, sowie als ein zweites Ende die Sternpunktanschlüsse UN, VN bzw. WN, die mit dem Sternpunkt der Maschine elektrisch verbunden sind.

Die Phasenspulenpaare U12, V12 und W12 sind vom selben Typ, so dass sie als Gleichteile hergestellt und verarbeitet werden können, was die Entwicklungs- und Herstellungskosten senkt. Die Phasenspulenpaare U34, V34 und W34 sind in ihrer Bauart ebenfalls untereinander identisch, jedoch von einem anderen Typ, als die die Phasenspulenpaare U12, V12 und W12. Für die Drehfeldmaschine müssen also nur zwei Arten von Phasenspulenpaaren bereitgestellt werden.

In Fig. 1 sind ist die axiale Richtung mit X_{A}, die radiale Richtung mit X_{R} und die tangentiale Richtung mit X_{T} bezeichnet. In den Figuren 3 und 7 gelten dieselben Richtungsangaben.

Fig. 2 zeigt das Schaltbild des Wicklungsschemas von Fig. 1. Am Beispiel der Phase U kann man sehen, dass die Phasenspulen U1 und U2 benachbart zueinander sind. Die Phasenspule U1 ist gegen den Uhrzeigersinn gewickelt und die Phasenspule U2 ist im Uhrzeigersinn gewickelt. Die weiteren Phasenspulen U3 und U4 sind im Uhrzeigersinn bzw. gegen den Uhrzeigersinn gewickelt. Die Phasenspule U1 ist mit dem Phasenanschluss U verbunden. Von der Phasenspule U1 setzt sich die Wicklung über die Phasenspulen U2, U3 und U4 bis zum Stempunktanschluss UN fort. Zwischen den Phasenspulenpaaren U12 und U34 wird die elektrische Verbindung von einer Verteilerschiene UB gewährleistet. Auch die V- und W-Phasen weisen eine Verteilerschiene VB bzw. WB auf. Die Verteilerschienen UB, VB und WB können als Gleichteile ausgeführt sein.

Das US Patent Nr. 6,323,574 offenbart in Fig. 14A bis Fig 14D einen vierphasigen Motor, der paarweise angeordnete Phasenspulen aufweist. Die Anschlüsse der vier Phasen A, B, C und D erstrecken sich über einen Bereich von 135 Grad.

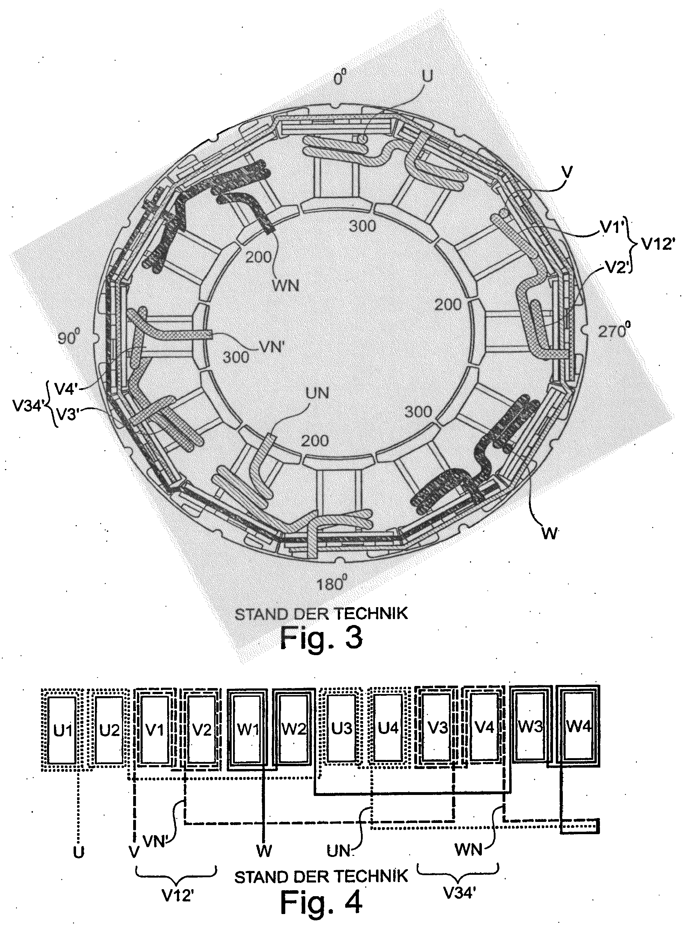

Fig. 3 zeigt ein Wicklungsschema, wie es prinzipiell beispielsweise aus der Patentanmeldung US 2004/0251764 A1, Fig. 2 bekannt ist. In Fig. 3 wurde die Wicklung der Phase V folgendermaßen gegenüber Fig. 1 geändert. Das Phasenspulenpaar V12' (bestehend aus den Phasenspulen V1', V2') hat mit dem Phasenspulenpaar V34' (bestehend aus den Phasenspulen V3', V4') die Plätze getauscht, wobei auf die korrekte Wicklungsrichtung geachtet wurde. Dadurch rückt der Phasenanschluss V in die Nähe des Phasenanschlusses U, da sich die erste Phasenspule V1' der Reihenschaltung der Phasenwicklung V nun bei 300° befindet. Der Phasenanschluss U befindet sich wie zuvor bei 0°. Auch die Sternpunktanschlüsse UN, VN' und WN sind näher zueinander gerückt und sind jetzt alle in zwischen einem Winkel von 30° bis zu einem Winkel von 150° zu finden. Die Sternpunktverbindung muss sich somit nur noch über einen Winkelbereich von 120° erstrecken, also die Hälfte gegenüber den 240° der Ausführung von Fig. 1.

Die Fig. 4 zeigt das zur Fig. 3 passende Schaltbild. Es ist zu sehen, dass die Phasenanschlüsse der Phasen U und V nur eine Polteilung auseinander sind, was im vorliegenden Beispiel 30° entspricht. Auch der Sternpunktanschluss VN' ist näher zu den beiden anderen Sternpunktanschlüssen UN und WN gerückt.

Mit der Ausführungsform nach Fig. 3 konnte bereits eine erste Reduzierung des Platzbedarfs erreicht werden. Eine weitere Reduzierung ist nichtsdestotrotz erstrebenswert. Bei der Ausführungsform nach Fig. 3 ist für die Phase V eine Verteilerschiene erforderlich, die sich von den Verteilerschienen der Phasen U und W unterscheidet. Die Verteilerschiene ist demnach kein Gleichteil für jede der drei Phasen mehr. Der Grund ist, das im Unterschied zur in Fig. 1 dargestellten Ausführungsform die Stromführung in Phase V geändert wurde. An der Stelle, wo in der Ausführungsform nach Fig. 1 die Stromzuführung erfolgt, liegt in Fig. 3 der Stern- punktanschluss. Der Strom wird am anderen Ende des Spulenpaares anstatt direkt durch den Phasenanschluss nun durch die Verteilerschiene eingeleitet.

Die vorliegende Erfindung hat somit die Aufgabe, eine mindestens ebenso platzsparende Wicklungsanordnung bereitzustellen, wie die Ausführungsform nach Fig. 3, und dabei die Verwendung von möglichst vielen Gleichteilen für die Fertigung der Phasenspulenpaare zu ermöglichen.

Diese Aufgabe wird nach Maßgabe der Erfindung durch eine Wicklungsanordnung für eine elektrische dreiphasige Drehfeldmaschine in Sternschaltung gelöst, die zumindest eine erste Phasenwicklung, eine zweite Phasenwicklung und eine dritte Phasenwicklung mit jeweils zumindest vier Phasenspulen, die in Tangentialrichtung der Drehfeldmaschine angeordnet sind, umfasst, wobei bei der ersten Phasenwicklung die Reihenfolge, in der die zumindest vier Phasenspulen elektrisch in Reihe geschaltet sind, so gewählt ist, dass die erste Phasenspule der Reihenschaltung der ersten Phasenwicklung in Tangentialrichtung benachbart zu der ersten Phasenspule der Reihenschaltung der zweiten Phasenwicklung ist. Der Begriff Tangentialrichtung beschreibt eine Richtung, die sowohl zur Hauptdrehachse der Drehfeldmaschine (in der Regel verkörpert durch die Motor- oder Generatorwelle), als auch zur radialen Richtung der Drehfeldmaschine senkrecht ist.

Die zumindest vier Phasenspulen der ersten Phasenwicklung bzw. der zweiten Phasenwicklung bzw. der dritten Phasenwicklung sind paarweise zu Phasenspulenpaaren zusammengefasst, wobei jedes Phasenspulenpaar aus zwei in Tangentialrichtung benachbarten Phasenspulen gebildet ist, und wobei jedes Phasenspulenpaar zumindest einen zwischen den Phasenspulen des entsprechenden Phasenspulenpaares befindlichen Anschlussabschnitt umfasst.

Die Erfindung entwickelt die aus Fig. 3 bekannte Ausführungsform in der Art weiter, dass innerhalb der Phasenwicklung von Phase V nicht nur die Phasenspulenpaare V12' und V34' getauscht werden, sondern darüber hinaus auch innerhalb der Phasenspulenpaare V12' und V34' die Reihenfolge des Stromdurchflusses getauscht wird. Die Erfindung ist nicht auf die Phase V beschränkt, sondern kann auf jede Phase angewendet werden.

Die erste Phasenspule der Reihenschaltung der ersten Phasenwicklung und die erste Phasenspule der Reihenschaltung der zweiten Phasenwicklung können jeweils mit einem entsprechenden Phasenanschluss der ersten Phasenwicklung bzw. der zweiten Phasenwicklung elektrisch verbunden sein. Durch die erfindungsgemäße Umstellung der Reihenfolge, in der die Phasenspulen einer Phasenwicklung von Strom durchflossen werden, können der erste Phasenanschluss und der zweite Phasenanschluss näher zueinander angeordnet werden. Die Anschlussklemmen der Drehfeldmaschine können ebenfalls in der Nähe der zwei Phasenanschlüsse vorgesehen sein, sodass innerhalb der Drehfeldmaschine nur kurze Verbindungen zwischen den Phasenwicklungen und den Anschlussklemmen zurückgelegt werden müssen.

Die erfindungsgemäße Wicklungsanordnung verwendet lediglich zwei unterschiedliche Arten von Phasenspulenpaaren. Die erste Art Phasenspulenpaar wird für die Phasenspulenpaare U12, V12 und W12 verwendet. Die zweite Art Phasenspulenpaar wird für die Phasenspulenpaare U34, V34 und W34 verwendet. Da jedoch die Phasenspulen innerhalb der Phasenspulenpaare V12' und V34' vertauscht sind, werden diese Phasenspulenpaare um die radiale Richtung um 180° gedreht auf die Statorzähne montiert.

Jedes Phasenspulenpaar kann zumindest einen zwischen Phasenspulen befindlichen Anschlussabschnitt umfassen. Durch die Anordnung des Anschlussabschnitts zwischen den Phasenspulen wird eine definierte Position des Anschlussabschnitts des Phasenspulenpaars gebildet. Diese definiert Position des Anschlussabschnitts erlaubt es, dass gleiche Bauteile für die elektrischen Verbindungen der unterschiedlichen Phasen verwendet werden können. Andernfalls müssten für jede Phase unterschiedliche Bauteile vorgesehen werden, beispielsweise Kabel oder Verteilerschienen unterschiedlicher Länge. Die Anordnung in der Mitte ist auch indifferent gegenüber Drehungen des Phasenspulenpaars um eine in radialer Richtung verlaufende Achse, die, wie oben beschrieben, für die Phasenspulenpaare V12' und V34' durchgeführt wird.

Die Phasenspulenpaare können als Gleichteile ausgeführt sein, die für sämtliche Phasenwicklungen verwendet werden können. Die Verwendung von Gleichteilen reduziert den Entwicklungs- und Fertigungsaufwand für die Wicklungsanordnung.

Die Reihenschaltung kann eine Verteilerschiene als elektrische Verbindung zwischen zwei Phasenspulen umfasst. Verteilerschienen können aufgrund der abgestimmten Länge und Form einfach montiert werden und benötigen wenig Platz innerhalb der Drehfeldmaschine. Die Isolierung der Verteilerschienen kann durch das Gehäuse der Drehfeldmaschine bereitgestellt werden, welches zu diesem Zweck an den entsprechenden Stellen aus einem elektrisch isolierenden Material bestehen sollte. Die Isolierung der Verteilerschienen zu den elektrisch leitenden Bauteilen des Motors kann auch über entsprechend ausgeformte Kunststoffspritzteile erfolgen, welche gleichzeitig die Funktion der Nutisolation des Stators erfüllen.

Sämtliche Phasenwicklungen können jeweils eine Verteilerschiene umfassen, wobei die Verteilerschienen gleich sein können. Die Verwendung von Gleichteilen kann auch auf die Verteilerschienen ausgedehnt werden, so dass eine weitere Vereinfachung und Kosteneinsparung realisiert werden kann.

Die Erfindung umfasst auch einen bürstenlosen Gleichstrommotor, der eine Wicklungsanordnung umfasst, wie sie zuvor beschrieben wurde. Ein bürstenloser Gleichstrommotor umfasst in der Regel eine Steuerschaltung, die aus einer Gleichspannung mehrere Ansteuerspannungen für die verschiedenen Phasen des bürstenlosen Gleichstrommotors macht. Ein Sensor zur Erfassung der Winkelposition des Rotors ist mit der Steuerschaltung verbunden und unterstützt die Steuerschaltung bei der Bestimmung der zeitlichen Steuerung und Taktung der verschiedenen Steuerspannungen. Dieser Sensor kann beispielsweise ein Hall-Sensor sein.

Weitere Merkmale und Vorteile der Erfindung werden im Rahmen der folgenden Beschreibung der beigefügten Figuren deutlich, die beispielhaft und nicht einschränkend verstanden werden sollte. In den Figuren gilt:
Fig. 1 zeigt den Stator einer Drehfeldmaschine gemäß dem Stand der Technik.
Fig. 2 zeigt ein Schaltbild der Wicklung des Stators aus Fig. 1.
Fig. 3 zeigt den Stator einer weiteren Drehfeldmaschine gemäß dem Stand der Technik.
Fig. 4 zeigt ein Schaltbild der Wicklung des Stators aus Fig. 3.

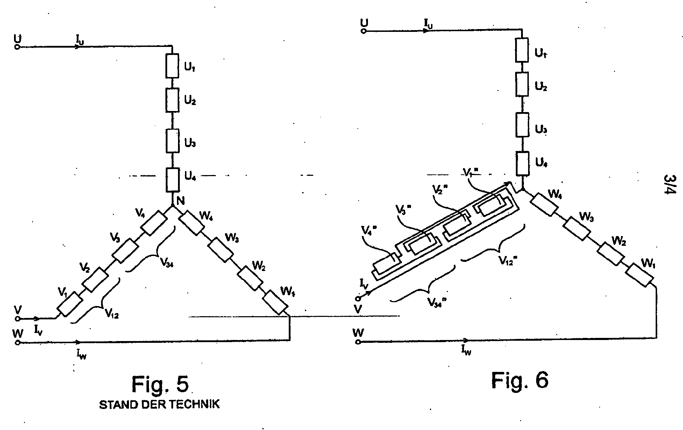

Fig. 5 zeigt ein schematisches Schaltbild einer Drehfeldmaschine gemäß dem Stand der Technik.
Fig. 6 zeigt ein schematisches Schaltbild einer Drehfeldmaschine gemäß der vorliegenden Erfindung.

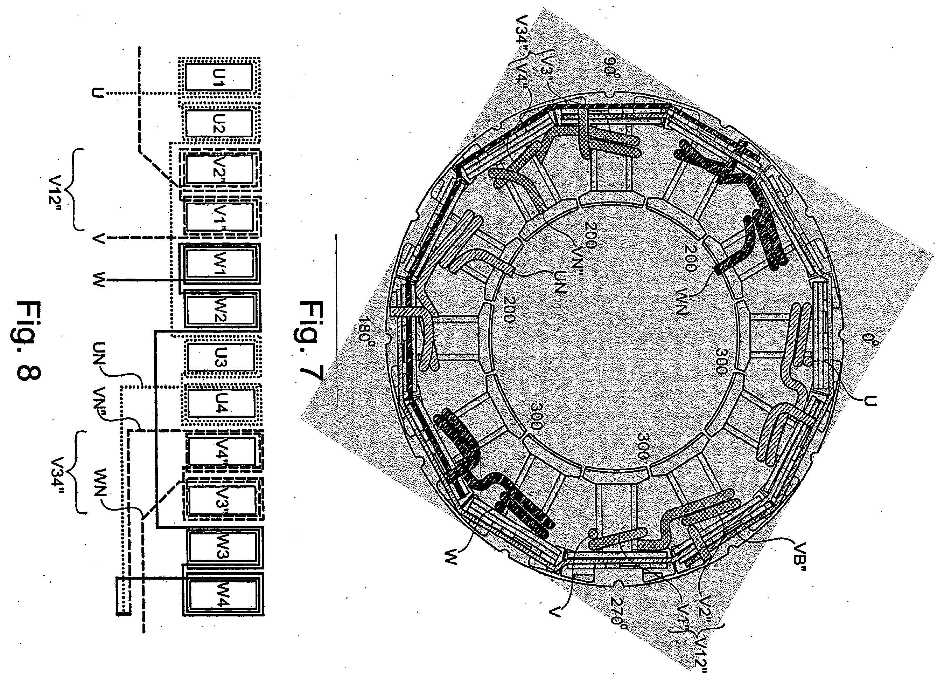

Fig. 7 zeigt den Stator einer Drehfeldmaschine mit einer Wicklungsanordnung gemäß der vorliegenden Erfindung.
Fig. 8 zeigt ein Schaltbild der Wicklung des Stators aus Fig. 7.

Die Figuren 1 bis 4 wurden bereits in der Einleitung der Anmeldung beschrieben.

In Fig. 5 ist das schematische Schaltbild einer herkömmlichen dreiphasigen Drehfeldmaschine in Sternschaltung dargestellt. Jede Phasenwicklung umfasst vier Phasenspulen, z.B. die Spulen V1, V2, V3 und V4 für die Phase V, die in dieser Reihenfolge von dem in Fig. 5 dargestellten Phasenstrom I_{V} durchflossen werden.

Fig. 6 zeigt ein schematisches Schaltbild einer dreiphasigen Drehfeldmaschine in Sternschaltung, in der die vorliegende Erfindung realisiert ist. Die Änderung gegenüber der Fig. 5 betrifft die Phase V. Die Phasenspulen werden in der Reihenfolge V1", V2", V3" und V4" von dem Phasenstrom Iv durchflossen. Allerdings wurde die räumliche Anordnung der Phasenspulen geändert. Die Funktionsweise der Drehfeldmaschine hat sich gegenüber der Fig. 5 nicht geändert, da noch immer jede der Phasenspulen V1" bis V4" von demselben Strom Iv in derselben Richtung durchflossen wird, wie zuvor. Durch die Umorganisation des Stromlaufplans können jedoch Vorteile gezogen werden, die die Lage der Anschlüsse von einer der Phasenwicklungen (hier der Phasenwicklung V) betreffen.

Fig. 7 zeigt den Stator einer Drehfeldmaschine mit einer Wicklungsanordnung gemäß der vorliegenden Erfindung. Die Phasenwicklungen der Phasen U und W sind unverändert gegenüber den Wicklungsanordnungen, die in den Fig. 1 und 3 gezeigt sind. Die Phasenwicklung der Phase V hat sich dagegen in folgender Weise geändert. Die erste Phasenspule V1" in der Reihenschaltung für die Phase V befindet sich bei 270°. Dementsprechend befindet sich auch der Anschluss der Phasenwicklung V bei 270° und somit nahe dem Anschluss der Phase W, welcher sich bei 240° befindet. Von der ersten Phasenspule V1" setzt sich der Strompfad zunächst zur Phasenspule V2" fort, die sich bei 300° befindet. Anschließend setzt sich der Strompfad über eine Verteilerschiene VB" fort, die sich annähernd über 150° erstreckt und bei der Phasenspule V3" endet. Die Winkelposition der Phasenspule V3" ist bei 90°. Der Strompfad geht bei der Phasenspule V4" weiter, die sich bei 120° befindet. Zum Schluss wird der Strompfad der Phasenwicklung von Phase V bei 120° zum Sternpunkt geführt.

Fig. 8 zeigt das Schaltbild der Wicklung aus Fig. 7. Es kann gesehen werden, dass der Abstand zwischen den Phasenanschlüssen der Phasen V und W gegenüber den gebräuchlichen Ausführungen reduziert ist. Dadurch kann eine elektrische Verbindung zur Steuereinheit des Motors (bspw. ein Steckergehäuse) kompakt und mit geringem Aufwand hergestellt werden. Nur der Wickeldraht der Phase U muss zu den Phasenanschlüssen V und W geführt werden. Daraus resultiert ein geringerer Montageaufwand und Bauteilkosten in der Herstellung des Motors. Auch das Sternpunktterminal kann kompakt ausgeführt werden. Wie insbesondere in Fig. 7 zu sehen ist, kommt es dabei zu keinen Überschneidungen von Wickeldrähten unterschiedlicher Phasen. Die Sternpunktanschlüsse ("Y-connection") der Phasen U und V liegen bereits dicht beieinander, nur der Wickeldraht der Phase W muss zu diesen geführt werden. Der Bauraum und die Materialkosten können dadurch reduziert und ein höherer Qualitätsstandard erreicht werden.

## Patentansprüche

1. Wicklungsanordnung für eine elektrische dreiphasige Drehfeldmaschine in Sternschaltung, umfassend zumindest eine erste Phasenwicklung, eine zweite Phasenwicklung und eine dritte Phasenwicklung mit jeweils zumindest vier Phasenspulen (V1" - V4", W1 - W4), die in Tangentialrichtung der Drehfeldmaschine angeordnet sind, wobei bei der ersten Phasenwicklung die Reihenfolge, in der die zumindest vier Phasenspulen (V1" - V4") elektrisch in Reihe geschaltet sind, so gewählt ist, dass die den Phasenanschluss der entsprechenden Phase aufweisenden erste Phasenspule (V1") der Reihenschaltung der ersten Phasenwicklung in Tangentialrichtung benachbart zu der den Phasenanschluss der entsprechenden Phase aufweisenden ersten Phasenspule (W1) der Reihenschaltung der zweiten Phasenwicklung ist,
wobei die zumindest vier Phasenspulen (V1" - V4") der ersten Phasenwicklung bzw. der zweiten Phasenwicklung bzw. der dritten Phasenwicklung paarweise zu Phasenspulenpaaren (V12", V34", W12, W34, U12, U34) zusammengefasst sind, wobei jedes Phasenspulenpaar aus zwei in Tangentialrichtung benachbarten Phasenspulen gebildet ist, und wobei
jedes Phasenspulenpaar (V12", V34", W12, W34, U12, U34) zumindest einen zwischen den Phasenspulen des entsprechenden Phasenspulenpaaren befindlichen Anschlussabschnitt umfasst.

2. Wicklungsanordnung für elektrische Drehfeldmaschine gemäß Anspruch 1, wobei die Phasenspulenpaare (V12", V34", W12, W34, U12, U34) in zwei Arten ausgeführt sind, die für sämtliche Phasenwicklungen verwendet werden können.

3. Wicklungsanordnung für elektrische Drehfeldmaschine gemäß einem der Ansprüche 1 bis 2, wobei die Reihenschaltung eine Verteilerschiene (VB", UB, WB) als elektrische Verbindung zwischen zwei Phasenspulen umfasst.

4. Wicklungsanordnung für elektrische Drehfeldmaschine gemäß Anspruch 3, wobei sämtliche Phasenwicklungen jeweils eine Verteilerschiene (VB", UB, WB) umfassen, und wobei die Verteilerschienen gleich sind.

5. Bürstenloser Gleichstrommotor, umfassend eine Wicklungsanordnung nach einem der Ansprüche 1 bis 4.

## Claims

1. Winding arrangement for an electric three phase induction machine in star configuration, comprising at least a first phase winding, a second phase winding and a third phase winding, each having at least four phase coils (V1 " - V4 ", W1 - W4), which are arranged in tangential direction of the induction machine, wherein, for the first phase winding, the order in which the at least four phase coils (V1 " - V4 ") are electrically connected in series, is chosen such that the first phase coil (V1") of the serial circuit of the first phase winding, having the phase connection of the corresponding phase, is adjacent in the tangential direction to the first phase coil (W1) of the serial circuit of the second phase winding having the phase connection of the corresponding phase, wherein said at least four phase coils (V1 " - V4 ") of the first phase winding, the second phase winding and the third phase winding, respectively, are combined pairwise to form phase coil pairs (V12 ", V34 ", W12, W34, U12, U34), wherein each phase coil pair is composed of two phase coils adjacent in tangential direction, and wherein each phase coil pair (V12 ", V34 ", W12, W34, U12, U34) is comprising at least one connecting portion arranged between the phase coils of the corresponding phase coil pair.

2. Winding arrangement for electrical induction machine according to claim 1, wherein the phase coil pairs (V12 ", V34 ", W12, W34, U12, U34) are realised in two kinds, that can be used for all of the phase windings.

3. Winding arrangement for electrical induction machine according to one of claims 1 to 2, wherein said serial circuit comprises a distribution bus (VB ", UB, WB) as an electrical connection between two phase windings.

4. Winding arrangement for electrical induction machine according to claim 3, wherein all phase windings each comprise a distribution bus (VB ', UB, WB), and wherein the distribution bus are identical.

5. A brushless DC motor comprising a winding arrangement according to one of claims 1 to 4.

## Revendications

1. Dispositif d'enroulement pour une machine à induction à trois phases électriques en couplage en étoile, comprenant au moins un premier enroulement de phase, un deuxième enroulement de phase et un troisième enroulement de phase, avec chacune au moins quatre bobines de phase (V1" - V4", W1 - W4), qui sont agencées en direction tangentielle de la machine à induction, dans lequel, dans le premier enroulement de phase, l'ordre dans lequel les au moins quatre enroulements de bobine (V1" - V4") sont connectés électriquement en série est choisi de sorte que la première bobine de phase (V1") du circuit en série du premier enroulement de phase, qui comprend le couplage de phase de la phase correspondante, est voisine de la première bobine de phase (W1) du circuit en série du deuxième enroulement de phase, qui comprend le couplage de phase de la phase correspondante,
dans lequel les au moins quatre bobines de phase (V1" - V4") du premier enroulement de phase, respectivement du deuxième enroulement de phase, respectivement du troisième enroulement de phase sont regroupées en paire de bobines de phase (V12", V34", W12, W34, U12, U34), chaque paire de bobines de phase étant formée de deux bobines de phase voisines dans la direction tangentielle, et dans lequel
chaque paire de bobines de phase (V12", V34", W12, W34, U12, U34) comprend au moins une partie de couplage entre les bobines de phase de la paire de bobines de phase correspondante.

2. Dispositif d'enroulement pour une machine à induction électrique selon la revendication 1, dans lequel les paires de bobines de phase (V12", V34", W12, W34, U12, U34) sont réalisées de deux manières, qui peuvent être utilisées pour l'ensemble des enroulements de phase.

3. Dispositif d'enroulement pour une machine à induction électrique selon l'une des revendications 1 à 2, dans lequel le circuit en série comprend un bus de distribution (VB", UB, WB) en tant que connexion électrique entre deux bobines de phase.

4. Dispositif d'enroulement pour une machine à induction électrique selon la revendication 3, dans lequel chacun des enroulements de phase comprend un bus de distribution (VB", UB, WB), et dans lequel les bus de distribution sont identiques.

5. Moteur à courant continu sans balais, comprenant un dispositif d'enroulement selon l'une quelconque des revendications 1 à 4.
